# EUROPEAN PATENT APPLICATION

(11) **EP 3 364 055 A1**
(43) Date of publication of application: **22.08.2018**
(21) Application number: 18157038.3
(22) Date of filing: 15.02.2018
(51) Int. Cl.: F16B 15/00, E04B 1/61

(54) **AN IMPROVED COUPLING APPARATUS**

(30) Priority: 15.02.2017 GB 201702482
(71) Applicant: Keystone Lintels Limited, County Tyrone (GB)
(72) Inventor: PLUNKETT COYLE, Sean, Cookstown Country Tyrone BT80 9DG (GB)
(74) Representative: Hanna, John Philip

(57) **Abstract**

A panel assembly comprising at least two SIP panels fixedly coupled together in a coplanar relationship by a coupling apparatus for fixedly coupling an edge surface of a first SIP panel to an edge surface of a second SIP panel in an abutting relationship so that the two SIP panels are coplanar. The coupling apparatus comprising at least one staple having a bridge and two embedding elements spaced apart along the length of the bridge. Each embedding element being adapted to embed into one of the two SIP panels so that the staple bridges the abutting edges and fixedly couples the two abutting SIP panels together in a coplanar relationship.

## Description

The present invention relates to an improved coupling apparatus.

Traditional methods of construction of residential buildings has historically used bricks, breeze blocks and/or infilled timber frames to provide structural strength. These buildings then require the addition of insulation to improve the thermal efficiency of the building. However, in 1947 development began on Structural Insulated Panels (SIPs). A SIP is a composite building material consisting of an insulating layer of rigid core sandwiched between two layers of structural board (OSB).

Use of SIPs has become an increasingly popular method of construction, particularly of residential buildings, replacing the traditional construction methods due to the speed and ease of build, superior insulation performance, and structural strength. However, connecting one SIP to an adjacent abutting SIP can be problematic as it involves applying adhesive and/or screwing or nailing the panels to the abutting or adjoining counterparts. One common practice uses a spline. The spline bridges the join between two SIPS by being inserted into two preformed channels that underlie the surface OSB in a SIP along the edge of the join between two SIPs. When in place, an installer can then use fastening means across the join line where two SIPs abut to secure the panels.

Problems arise when implementing this method in practice. Firstly, where two SIPs abut, each SIP must be specifically adapted to receive the spline adding to manufacturing costs. Secondly, fitting the spline on site can be precarious slowing the overall progress of the build.

It is an object of the present invention to obviate or mitigate the need for extra materials, i.e. splines, when coupling adjacent abutting SIPs to one another; and improve the efficiency by which SIPs can be abutted in building panels with multiple SIP panels.

Accordingly, the present invention provides a coupling means for fixedly coupling an edge surface of a first SIP panel to an edge surface of a second SIP panel in an abutting relationship so that the two SIP panels are coplanar, the coupling means comprising at least one staple having a bridge and two embedding elements spaced apart along the length of the bridge, each embedding element being adapted to embed into one of the two SIP panels so that the staple bridges the abutting edges and fixedly couples the two abutting SIP panels together in a coplanar relationship.

Ideally, the coupling means is for fixedly coupling an edge surface of a first SIP panel to an edge surface of a second SIP panel in an abutting relationship so that the two SIP panels are coplanar and wherein both of the outside main planar surfaces of the abutting oriented strand boards OSB of the abutting SIP panels are in alignment.

Ideally, the staples being embedded into both of the outside main planar surfaces of the abutting oriented strand boards OSB of the abutting SIP panels.

Preferably, the staples bridging the two abutting edges of the two abutting SIP panels on both of the outside main planar surfaces of the abutting SIP panels.

Advantageously, the staples are readily mechanically fixed to the two abutting SIP panels to fixedly couple the two SIP panels together in a coplanar arrangement without requiring any additional modifications to the SIP panels.

Ideally, the free ends of the embedding elements are adapted to embed into the two abutting SIP panels and to simultaneously bend towards each other as a result of the application of an impact or drive force being applied to the bridge of the staple.

Preferably, the free end of each embedding element has a beveled surface commencing at a location along the outside of the embedding element and slicing through the body of the embedding element so that the embedding element is tapering to a point on the inside of the embedding element for embedding into an oriented strand board OSB of the SIP panel.

Ideally, the beveled surface measures 1 mm to 5mm from the inside of the embedding element to the outside of the embedding element.

Preferably, the beveled surface measures 2mm from the inside of the embedding element to the outside of the embedding element.

By inside of the embedding element, we mean the parts of the embedding elements that face towards each other. By outside of the embedding element we mean the parts of the embedding elements that face away from each other.

Advantageously, having a beveled surface tapering to an embedding point on an inside part of each embedding element allows the staple to embed into the two abutting SIP panels and to simultaneously bend towards each other as a result of application of an impact or drive force being applied to the bridge of the staple.

Ideally, the width of the bridge of the coupling apparatus is wide enough to abridge the joint between the first SIP panel and the second SIP panel.

Ideally, the embedding elements are shorter in length than the width of the bridge.

Ideally, the embedding elements are shorter in length in the embedded position than the depth of the OSB.

Ideally, the bridge of the staple measures between 20mm and 100mm in length.

Ideally, the bridge of the staple measures between 30mm and 80mm in length.

Ideally, the bridge of the staple measures between 40mm and 70mm in length.

Preferably, the bridge of the staple measures 60mm in length.

By length of the bridge we mean the distance that extends between the embedding elements.

Ideally, the distance between the outside shoulder and the end of the outside fo the embedding elelment and the inside of the embedding element is 1 to 4mm.

Ideally, the distance between the outside shoulder and the end of the outside fo the embedding elelment and the inside of the embedding element is 2mm.

Ideally, the staples are spaced apart along the longitudinal length of the abutting edges of the SIP panels.

Preferably, the staples are spaced apart at centers in the range of 30 to 70 mm along the longitudinal length of the abutting edges of the SIP panels.

Ideally, the staples are spaced apart at centers in the range of 40 to 60 mm along the longitudinal length of the abutting edges of the SIP panels.

Accordingly, the present invention also provides a panel assembly comprising at least two SIP panels fixedly coupled together in a coplanar relationship by a coupling means for fixedly coupling an edge surface of a first SIP panel to an edge surface of a second SIP panel in an abutting relationship so that the two SIP panels are coplanar, the coupling means comprising at least one staple having a bridge and two embedding elements spaced apart along the length of the bridge, each embedding element being adapted to embed into one of the two SIP panels so that the staple bridges the abutting edges and fixedly couples the two abutting SIP panels together in a coplanar relationship.

Ideally, the staple being embedded into both of the outside main planar surfaces of the abutting oriented strand boards OSB of the abutting SIP panels.

Preferably, the staple bridging the two abutting edges of the two abutting SIP panels on both of the outside main planar surfaces of the abutting SIP panels.

Advantageously, the staples are readily mechanically fixed to the two abutting SIP panels to fixedly couple the two SIP panels together in a coplanar arrangement without requiring any additional modifications to the SIP panels.

Ideally, the staple is readily mechanically fixed to the two abutting SIP panels to fixedly couple the two SIP panels together in a coplanar arrangement without requiring any additional modifications to the SIP panels.

Ideally, the free ends of the embedding elements are adapted to embed into the two abutting SIP panels and to simultaneously bend towards each other as a result of the application of an impact or drive force being applied to the bridge of the staple.

Preferably, the free end of each embedding element has a beveled surface commencing at a location along the outside of the embedding element and slicing through the body of the embedding element so that the embedding element is tapering to a point on the inside of the embedding element for embedding into an oriented strand board OSB of the SIP panel.

By inside of the embedding element, we mean the parts of the embedding elements that face towards each other. By outside of the embedding element we mean the parts of the embedding elements that face away from each other.

Advantageously, having a beveled surface tapering to an embedding point on an inside part of each embedding element allows the staple to embed into the two abutting SIP panels and to simultaneously bend towards each other as a result of application of an impact or drive force being applied to the bridge of the staple.

Ideally, the staples are spaced apart along the longitudinal length of the abutting edges of the SIP panels.

Preferably, the staples are spaced apart at centers in the range of 30 to 70 mm along the longitudinal length of the abutting edges of the SIP panels.

Ideally, the staples are spaced apart at centers in the range of 40 to 60 mm along the longitudinal length of the abutting edges of the SIP panels.

Ideally, the width of the bridge of the coupling apparatus is wide enough to abridge the joint between the first SIP panel and the second SIP panel.

Ideally, the embedding elements are shorter in length than the width of the bridge.

Ideally, the embedding elements are shorter in length in the embedded position than the depth of the OSB.

Accordingly, the present invention also provides a method of mechanically fixing a SIP panel assembly together comprising the steps of abutting at least two SIP panels together in a coplanar relationship, applying a coupling means for fixedly coupling an edge surface of the first SIP panel to an edge surface of a second SIP panel in an abutting relationship so that the two SIP panels are coplanar, the method comprising mechanically fixing at least one staple having a bridge and two embedding elements spaced apart along the length of the bridge to the abutting SIP panels so that each embedding element is embedded into one of the two SIP panels so that the staple bridges the abutting edges and fixedly couples the two abutting SIP panels together in a coplanar relationship.

Preferably, the method comprising mechanically fixing a plurality of staples along the abutting edges of the abutting SIP panels so that each embedding element is embedded into one of the two SIP panels so that the staple bridges the abutting edges and fixedly couples the two abutting SIP panels together in a coplanar relationship.

Ideally, the method comprising mechanically fixing a plurality of staples along the abutting edges of the abutting SIP panels on both outer main planar surfaces of the SIP panels.

Preferably, the free end of each embedding element has a beveled surface commencing at a location along the outside of the embedding element and slicing through the body of the embedding element so that the embedding element is tapering to a point on the inside of the embedding element for embedding into an oriented strand board OSB of the SIP panel.

The skilled man will appreciate that all preferred or optional features of the invention described with reference to only some aspects or embodiments of the invention may be applied to all aspects of the invention.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The invention will now be described with reference to the accompanying drawing which shows by way of example only one embodiment of a panel assembly in accordance with the invention. In the drawing:
Figure 1 is a perspective view of a panel assembly of the present invention;
Figure 2 is an elevation view of a staple of the present invention; and
Figure 3 is an elevation view of a staple of the present invention in an installed configuration;

Referring to the drawings there is shown a panel assembly indicated generally by the reference numeral 1. The panel assembly having at least two SIP panels 2 fixedly coupled together in a coplanar relationship by a coupling arrangement 3 for fixedly coupling an edge surface 4 of a first SIP panel 2 to an edge surface 4 of a second SIP panel 2 in an abutting relationship so that the two SIP panels 2 are coplanar. The SIP is a composite building material consisting of an insulating layer of rigid core 16 sandwiched between two layers of structural board (OSB) 8.

The coupling arrangement 3 has at least three staples 3 having a bridge 5 and two embedding elements 6 spaced apart along the length of the bridge 5. Each embedding element 6 being adapted to embed into one of the two SIP panels 2 so that the staple 3 bridges the abutting edges 7 and fixedly couples the two abutting SIP panels 2 together in a coplanar relationship.

The staples 3 are embedded into both of the outside main planar surfaces of the abutting oriented strand boards OSB's 8 of the abutting SIP panels 2. The staples 3 bridging the two abutting edges 7 of the two abutting SIP panels 2 on both of the outside main planar surfaces of the abutting SIP panels 2.

Advantageously, the staples 2 are readily mechanically fixed to the two abutting SIP panels 2 to fixedly couple the two SIP panels 2 together in a coplanar arrangement without requiring any additional modifications to the SIP panels 2.

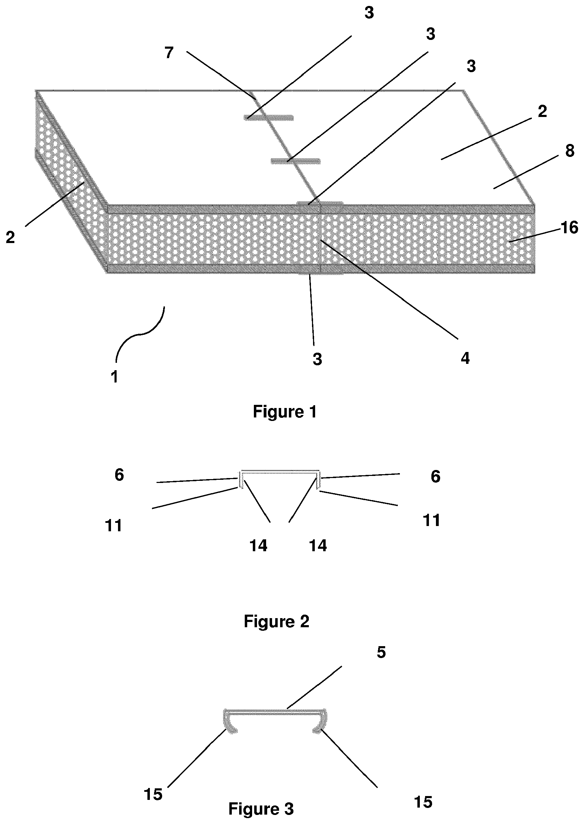

The free ends of the embedding elements 6 are adapted to embed into the two abutting SIP panels 2 and to simultaneously bend towards each other, see Figures 1 and 3 as a result of the application of an impact or drive force being applied to the bridge 5 of the staple 3. The free end of each embedding element 6 has a beveled surface 11 commencing at a location along the outside of the embedding element 6 and slicing through the body of the embedding element 6 so that the embedding element 6 is tapering to a point on the inside of the embedding element for embedding into an oriented strand board OSB 8 of the SIP panel 2.

By inside of the embedding element, we mean the parts 14 of the embedding elements 6 that face towards each other. By outside of the embedding element 6 we mean the parts of the embedding elements that face away from each other.

Advantageously, having a beveled surface 11 tapering to an embedding point on an inside part 14 of each embedding element 6 allows the staple 3 to embed into the two abutting SIP panels 2 and to simultaneously bend towards each other leaving the embedding elements with a curved configuration 15 as a result of application of an impact or drive force being applied to the bridge 5 of the staple 2. The staples 3 are spaced apart along the longitudinal length of the abutting edges of the SIP panels at centers in the range of 30 to 70 mm and most preferably at centers in the range of 40 to 60 mm along the longitudinal length of the abutting edges of the SIP panels. The width of the bridge 5 of the staple 3 is wide enough to abridge the joint between the first SIP panel and the second SIP panel. The embedding elements 6 are shorter in length than the width of the bridge 5. The embedding elements 6 are shorter in length in the embedded position than the depth of the OSB of the staple 3.

In use an operator fixes a SIP panel assembly 1 together by abutting at least two SIP panels 2 together in a coplanar relationship, and applying staples 3 for fixedly coupling an edge surface 4 of the first SIP panel 2 to an edge surface 4 of the second SIP panel 2 in an abutting relationship so that the two SIP panels 2 are coplanar. The operator mechanically fixes the staples 3 having a bridge 5 and two embedding elements 6 spaced apart along the length of the bridge 5 to the abutting SIP panels 2 so that each embedding element 6 is embedded into one of the two SIP panels 2 so that the staple 3 bridges the abutting edges and fixedly couples the two abutting SIP panels 2 together in a coplanar relationship.

The operator fixes a plurality of staples 3 along the abutting edges of the abutting SIP panels 2 so that each embedding element 6 is embedded into one of the two SIP panels 2 so that the staple 3 bridges the abutting edges and fixedly couples the two abutting SIP panels 2 together in a coplanar relationship. The operator mechanically fixes a plurality of staples 3 along the abutting edges of the abutting SIP panels 2 on both outer main planar surfaces of the SIP panels.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof.

## Claims

1. A panel assembly comprising at least two SIP panels fixedly coupled together in a coplanar relationship by a coupling means for fixedly coupling an edge surface of a first SIP panel to an edge surface of a second SIP panel in an abutting relationship so that the two SIP panels are coplanar, the coupling means comprising at least one staple having a bridge and two embedding elements spaced apart along the length of the bridge, each embedding element being adapted to embed into one of the two SIP panels so that the staple bridges the abutting edges and fixedly couples the two abutting SIP panels together in a coplanar relationship.

2. A panel assembly as claimed in claim 1 wherein the staple being embedded into both of the outside main planar surfaces of the abutting oriented strand boards OSB of the abutting SIP panels.

3. A panel assembly as claimed in claim 1 or claim 2 wherein the staple bridging the two abutting edges of the two abutting SIP panels on both of the outside main planar surfaces of the abutting SIP panels.

4. A panel assembly as claimed in any one of claims 1 to 3 wherein the staple is readily mechanically fixed to the two abutting SIP panels to fixedly couple the two SIP panels together in a coplanar arrangement without requiring any additional modifications to the SIP panels.

5. A panel assembly as claimed in any one of claims 1 to 4 wherein the free ends of the embedding elements are adapted to embed into the two abutting SIP panels and to simultaneously bend towards each other as a result of the application of an impact or drive force being applied to the bridge of the staple.

6. A panel assembly as claimed in any one of claims 1 to 5 wherein the staples are spaced apart along the longitudinal length of the abutting edges of the SIP panels.

7. A panel assembly as claimed in any one of claims 1 to 6 wherein the width of the bridge of the coupling apparatus is wide enough to abridge the joint between the first SIP panel and the second SIP panel.

8. A panel assembly as claimed in any one of claims 1 to 7 wherein the embedding elements are shorter in length than the width of the bridge.

9. A panel assembly as claimed in any one of claims 1 to 8 wherein the embedding elements are shorter in length in the embedded position than the depth of the OSB.

10. A panel assembly as claimed in any one of claims 1 to 9 wherein the free end of each embedding element has a beveled surface commencing at a location along the outside of the embedding element and slicing through the body of the embedding element so that the embedding element is tapering to a point on the inside of the embedding element for embedding into an oriented strand board OSB of the SIP panel.

11. A method of mechanically fixing a SIP panel assembly together comprising the steps of abutting at least two SIP panels together in a coplanar relationship, applying a coupling means for fixedly coupling an edge surface of the first SIP panel to an edge surface of a second SIP panel in an abutting relationship so that the two SIP panels are coplanar, the method comprising mechanically fixing at least one staple having a bridge and two embedding elements spaced apart along the length of the bridge to the abutting SIP panels so that each embedding element is embedded into one of the two SIP panels so that the staple bridges the abutting edges and fixedly couples the two abutting SIP panels together in a coplanar relationship.

12. A method of mechanically fixing a SIP panel assembly together as claimed in claim 11 wherein the free end of each embedding element has a beveled surface commencing at a location along the outside of the embedding element and slicing through the body of the embedding element so that the embedding element is tapering to a point on the inside of the embedding element for embedding into an oriented strand board OSB of the SIP panel.

13. A method of mechanically fixing a SIP panel assembly together as claimed in claim 11 or claim 12 wherein the method comprising mechanically fixing a plurality of staples along the abutting edges of the abutting SIP panels so that each embedding element is embedded.

14. A coupling means for fixedly coupling an edge surface of a first SIP panel to an edge surface of a second SIP panel in an abutting relationship so that the two SIP panels are coplanar, the coupling means comprising at least one staple having a bridge and two embedding elements spaced apart along the length of the bridge, each embedding element being adapted to embed into one of the two SIP panels so that the staple bridges the abutting edges and fixedly couples the two abutting SIP panels together in a coplanar relationship.

15. A coupling means as claimed in claim 14 to 17 wherein the free end of each embedding element has a beveled surface commencing at a location along the outside of the embedding element and slicing through the body of the embedding element so that the embedding element is tapering to a point on the inside of the embedding element for embedding into an oriented strand board OSB of the SIP panel.
